# EUROPÄISCHE PATENTSCHRIFT

(11) **EP 3 863 794 B1**
(45) Veröffentlichungstag und Bekanntmachung des Hinweises auf die Patenterteilung: **09.10.2024**
(21) Anmeldenummer: 19755355.5
(22) Anmeldetag: 14.08.2019
(51) Int. Cl.: B23K 26/38, B26D 5/00, B26F 3/16

(54) **VERFAHREN UND BEARBEITUNGSMASCHINE ZUM SCHNEIDEN VON WERKSTÜCKEN SOWIE ZUGEHÖRIGES COMPUTERPROGRAMMPRODUKT**
METHOD AND MACHINING TOOL FOR CUTTING WORKPIECES AND ASSOCIATED COMPUTER PROGRAM PRODUCT
PROCÉDÉ ET MACHINE DE TRAITEMENT POUR LA DÉCOUPE DE PIÈCES OUVRÉES AINSI QUE PRODUIT DE PROGRAMME INFORMATIQUE ASSOCIÉ

(30) Priorität: 09.10.2018 DE 102018217200
(43) Veröffentlichungstag der Anmeldung: 18.08.2021
(73) Patentinhaber: TRUMPF Werkzeugmaschinen SE + Co. KG, 71254 Ditzingen (DE)
(72) Erfinder: OCKENFUSS, Simon, 71272 Renningen (DE); KNIERIM, Karl Lukas, 70199 Stuttgart (DE)
(74) Vertreter: Trumpf Patentabteilung
(86) Internationale Anmeldenummer: PCT/EP2019/071849
(87) Internationale Veröffentlichungsnummer: WO 2020/074156

(56) Entgegenhaltungen:
- WO-A1-98/47656
- DE-B3- 102014 200 208
- JP-A- 2004 122 217

## Beschreibung

Die Erfindung betrifft ein Verfahren und eine Bearbeitungsmaschine zum Schneiden eines insbesondere plattenförmigen Werkstücks mittels eines Schneidstrahls und eines Schneidfluids, bei dem ein freizuschneidendes Werkstückteil nacheinander in mindestens zwei kleinere Teilstücke geschnitten wird, welche nach ihrem jeweiligen Freischnitt nach unten aus einem umgebenden Restwerkstück fallen oder abgesenkt werden, sowie auch ein zugehöriges Computerprogrammprodukt. Der Freischnitt der Teilstücke erfolgt an einem Freischnittpunkt, an dem sich der jeweilige Trennschnitt des Teilstücks zu einer geschlossenen Kontur schließt. Der Schneidstrahl und das Schneidfluid können - wie beispielsweise beim Wasserstrahlschneiden - identisch, d.h. durch dasselbe Medium gebildet, sein.

Beim Schneiden von insbesondere plattenförmigen und metallischen Werkstücken mittels eines Schneidstrahls, also z.B. mittels eines Plasmastrahls, Laserstrahls und/oder Wasserstrahls, entstehen kleinere Abfallteile (Butzen), die üblicherweise durch freien Fall aus dem Bearbeitungsbereich der Schneidmaschine ausgeschleust werden. Je nach Dicke des Werkstücks und nach Geometrie des Abfallteils kann ein solches Teil jedoch beim Freischnitt kippen oder im Restwerkstück verklemmen oder verhaken. Diese Teile können Kollisionen mit dem Schneidkopf verursachen und erschweren eine spätere automatisierte Entnahme des Restwerkstücks aus der Maschine.

Aus dem Stand der Technik, beispielsweise aus JPH 10244394 A oder WO 2015/080179 A1, ist es zur Verbesserung der Prozesssicherheit beim Schneiden und Ausschleusen von Werkstückteilen bekannt, das Werkstückteil in kleinere Teilstücke zu unterteilen, die nach dem Freischnitt sicher nach unten fallen. In der JPH 10244394 A wird offenbart, bei einem U-förmigen Werkstückteil zunächst die beiden Seitenschenkel und anschließend das Verbindungsstück freizuschneiden. Aus US 2013/0200051 A ist es bekannt, Schneidbutzen spiralförmig zu zerschneiden Aus der WO9847656 ist es bekannt, die Aufteilung in die Teilstücke und die Schnittführung zum Abtrennen des ersten Teilstücks derart zu wählen, dass der Freischnittpunkt eines Teilstücks innerhalb der Außenkontur des freizuschneidenden Werkstückteils und oberhalb des Schwerpunktes des Teilstückes liegt. Demgegenüber stellt sich der vorliegenden Erfindung die Aufgabe, die Prozesssicherheit beim Schneiden von Werkstückteilen mittels eines Schneidstrahls, die nach dem Freischnitt durch freien Fall aus dem Schneidbereich ausgeschleust werden sollen, weiter zu verbessern.

Diese Aufgabe wird erfindungsgemäß dadurch gelöst, dass die Aufteilung in die Teilstücke und die Schnittführung zum Abtrennen des ersten Teilstücks derart erfolgen, dass der Freischnittpunkt des zuerst geschnittenen, ersten Teilstücks innerhalb der Außenkontur des freizuschneidenden Werkstückteils liegt. Erfindungsgemäß liegt der Freischnittpunkt des ersten Teilstücks also nicht auf der Außenkontur des freizuschneidenden Werkstückteils und daher näher am Schwerpunkt des ersten Werkstückteils. Im Moment des Freischnitts ist das aufgrund des Schneidfluiddruckes (Gasdrucks, Wasserdrucks) auf das erste Teilstück wirkende Kippmoment im Vergleich zu einem Freischnittpunkt auf der Außenkontur des Werkstückteils reduziert. Dies führt zu einer verringerten oder bestenfalls zu gar keiner Kippbewegung des ersten Teilstücks, das somit deutlich prozesssicherer aus dem Restwerkstück herausfallen kann. In einem zweiten Schritt wird dann das zweite Teilstück vom Restwerkstück freigetrennt und fällt, da es weitgehend nicht mehr von Material umgeben ist, sondern frei innerhalb der im ersten Schnitt gebildeten Öffnung im Restwerkstück liegt, sicher aus dem Restwerkstück nach unten. Die Aufteilung der Teilstücke und die Schnittführung ermöglichen es, dass das erste Teilstück in einem optimalen Freischnittpunkt freigeschnitten werden kann und somit verkantungssicher aus dem Restwerkstück fällt.

Vorzugsweise wird das freizuschneidende Werkstückteil flächenmäßig in ein größeres, erstes Teilstück und ein kleineres, zweites Teilstück aufgeteilt. Je größer das erste Teilstück gewählt wird, desto näher liegt der Schwerpunkt des ersten Teilstücks am Gesamtschwerpunkt des Werkstückteils, was die Prozesssicherheit erhöht. Beispielsweise kann das freizuschneidende Werkstückteil in ein erstes Teilstück und ein vom ersten Teilstück dreiseitig umgebenes zweites Teilstück aufgeteilt werden. In diesem Fall erstreckt sich das zweite Teilstück stegförmig in das erste Teilstück hinein.

Das zweite Teilstück muss ausreichend groß gewählt werden, damit die beim Schneiden des ersten Teilstücks in das zweite Teilstück eingebrachte Wärme zum Restwerkstück abfließen kann. Ist die Breite des zweiten Teilstücks quer zur Wärmeflussrichtung zu klein gewählt, kann die Wärme nicht ausreichend schnell abfließen und es kann zu einem thermischen Verzug des zweiten Teilstücks und zu einem Verklemmen des ersten mit dem zweiten Teilstück kommen. Vorteilhaft erfolgen daher die Aufteilung in die Teilstücke und die Schnittführung zum Abtrennen des ersten Teilstücks derart, dass die Breite des zweiten Teilstücks mindestens so groß wie die Dicke des Werkstücks ist.

Damit zum Zeitpunkt des Freischnitts nur ein möglichst geringes Kippmoment aufgrund des Schneidfluiddrucks auf das erste Teilstück wirkt, erfolgen die Aufteilung in die Teilstücke und die Schnittführung zum Abtrennen des ersten Teilstücks erfindungsgemäß derart, dass der Freischnittpunkt des ersten Teilstücks in einem Radius um den Schwerpunkt des ersten Teilstücks liegt, wobei die vom Radius begrenzte Kreisfläche weniger als 1/3 der Fläche des ersten Teilstücks einnehmen sollte. Alternativ oder zusätzlich liegt der Freischnittpunkt des ersten Teilstücks erfindungsgemäß im Schwerpunkt des freizuschneidenden Werkstückteils, im Schwerpunkt des ersten Teilstücks oder im Bereich zwischen diesen beiden Schwerpunkten.

Die Geometrie des zweiten Teilstücks wird so festgelegt, dass diese ein möglichst geringes Risiko für das Verkanten des ersten Teilstücks nach dessen Freischnitt darstellt. Dazu kann das zweite Teilstück in seiner Geometrie so gewählt werden, dass sich sein Querschnitt bzw. der Abstand der einander zugewandten Seitenkanten vom Freischnittpunkt des ersten Teilstückes bis zum Freischnittpunkt des zweiten Teilstückes vergrößert. Das zweite Teilstück weist somit von der Außenkontur des Werkstückteils nach innen hin aufeinander zulaufende Seitenkanten auf, so dass sich eine konische Form des zweiten Teilstücks ergibt. Weiter bevorzugt ist die Form des zweiten Teilbereichs symmetrisch und insbesondere weist die Außenkontur des zweiten Teilbereichs keine rechten Winkel in den Ecken auf, sondern ist in den Ecken gefast oder abgerundet.

Um ein Verkanten des ersten am zweiten Teilstück wirkungsvoll zu verhindern, wird bevorzugt der Trennschnitt zwischen dem ersten und dem zweiten Teilstück ohne winklige Ecken, sondern mit gefasten oder abgerundeten Ecken ausgeführt.

In einer Weiterbildung der Erfindung wird der Trennschnitt zwischen dem ersten und dem zweiten Teilstück derart schräg ausgeführt, dass die Unterkante des ersten Teilstücks weiter nach außen als die Oberkante vorsteht, also beispielsweise einander zugewandte Seitenkanten des zweiten Teilstücks eine nach unten zulaufende, konische Form aufweisen. Dies erleichtert den Fall des ersten Teilstücks nach unten und ist dann möglich, wenn die Bearbeitungsmaschine eine Schrägstellung des Bearbeitungskopfs erlaubt, so dass relativ zur Werkstückoberfläche geneigte Schnittkanten erzeugt werden können.

Zur Verbesserung der Kantenqualität beim Trennen des zweiten Teilstücks kann beim Freischneiden des ersten Teilstücks bereits ein Teiltrennschnitt zwischen dem zweiten Teilstück und dem Restwerkstück ausgeführt, also die Verbindungskontur zwischen dem zweiten Teilstück und dem Restwerkstück bereits angeschnitten werden.

Insbesondere für den Fall, dass der Schwerpunkt des freizuschneidenden Werkstückteils außerhalb des Werkstückteils liegt, kann das Werkstückteil in mehrere nacheinander zu schneidende Segmente unterteilt werden, wobei mindestens ein Segment wie oben beschrieben in mindestens zwei Teilstücke aufgeteilt wird, welche nacheinander geschnitten werden. Dabei werden die Segmente jeweils derart gewählt, dass ihr Schwerpunkt innerhalb der Kontur der jeweiligen Segmente liegt. Es ist auch möglich, alle Segmente in mindestens zwei Teilstücke aufzuteilen.

Die Erfindung betrifft auch eine zum Durchführen des erfindungsgemäßen Verfahrens geeignete Bearbeitungsmaschine mit einer Werkstückauflage, mit einem Schneidstrahl (strahlförmigen Werkzeug) und einem Schneidfluid, mit einem relativ zu einem auf der Werkstückauflage aufliegenden, plattenförmigen Werkstück bewegbaren Bearbeitungskopf, aus dem der Schneidstrahl und das Schneidfluid austreten, und mit einer Maschinensteuerung, die programmiert ist, die Relativbewegung zwischen Bearbeitungskopf und Werkstück gemäß dem oben beschriebenen Verfahren zu steuern. Bei einer Wasserstrahl-Schneidmaschine bildet das Schneidfluid gleichzeitig den Schneidstrahl, d.h. Schneidstrahl und Schneidfluid sind identisch.

Die Erfindung betrifft schließlich auch ein Computerprogrammprodukt, welches Codemittel aufweist, die zum Durchführen aller Schritte des oben beschriebenen Verfahrens angepasst sind, wenn das Programm auf einer Maschinensteuerung einer Bearbeitungsmaschine abläuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: eine zum Durchführen des erfindungsgemäßen Laserschneidverfahrens zum Freischneiden von Werkstückteilen geeignete Laserbearbeitungsmaschine;
- Fig. 2: eine beim erfindungsgemäßen Laserschneidverfahren vorgenommene Aufteilung eines freizuschneidenden Werkstückteils in zwei kleinere Teilstücke;
- Fig. 3: eine vorteilhafte Schnittführung zum Freischneiden des ersten Teilstücks vom zweiten Teilstück und vom Restwerkstück;
- Fig. 4: eine Schnittansicht des Werkstückteils gemäß IV-IV in Fig. 2 im Moment des Freischnitts;
- Fig. 5: eine gegenüber Fig. 2 modifizierte Aufteilung des freizuschneidenden Werkstückteils in zwei kleinere Teilstücke;
- Fig. 6: eine Unterteilung des freizuschneidenden Werkstückteils in mehrere Segmente, die ihrerseits jeweils in zwei nacheinander zu schneidende Teilstücke aufgeteilt sind; und
- Fig. 7: eine gegenüber Fig. 6 modifizierte Segmentunterteilung des freizuschneidenden Werkstückteils.

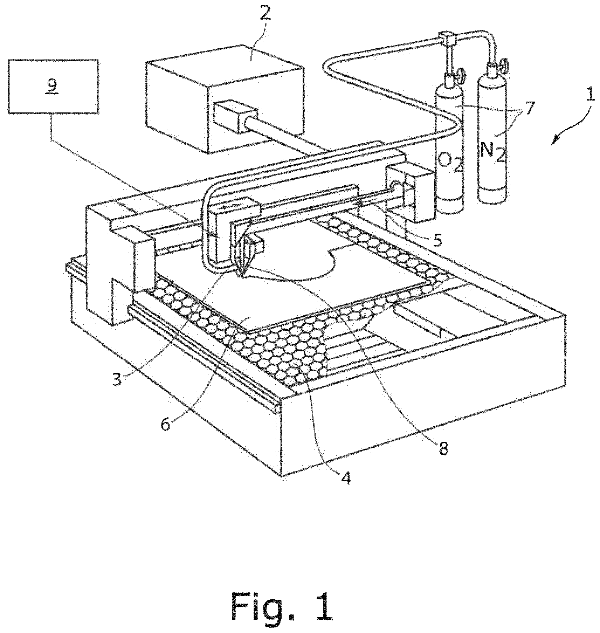

In **Fig. 1** ist perspektivisch eine Bearbeitungsmaschine mit strahlförmigem Werkzeug am Beispiel einer Laserbearbeitungsmaschine **1** dargestellt. Weitere Ausführungsbeispiele solcher Bearbeitungsmaschinen sind eine kombinierte Stanz-/Laserschneidmaschine, eine Plasmaschneidmaschine oder eine Wasserstrahl-schneidmaschine. Die Laserbearbeitungsmaschine 1 weist beispielsweise einen CO₂-Laser, Diodenlaser oder Festkörperlaser als Laserstrahlerzeuger **2,** einen verfahrbaren Bearbeitungskopf **3** und eine Werkstückauflage **4** auf. Im Laserstrahlerzeuger 2 wird ein Laserstrahl **5** erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Werkstückauflage 4 ist ein Werkstück **6** in Form eines Bleches angeordnet. Der Laserstrahl 5 wird mittels einer im Bearbeitungskopf 3 angeordneten Fokussieroptik auf das Werkstück 6 gerichtet.

Die Laserbearbeitungsmaschine 1 wird darüber hinaus mit Schneidgasen **7**, beispielsweise Sauerstoff und Stickstoff, versorgt. Es können alternativ oder zusätzlich auch Druckluft oder anwendungsspezifische Gase, wie z.B. Inertgase, vorgesehen sein. Das Schneidgas 7 wird einer Schneidgasdüse **8** des Bearbeitungskopfes 3 zugeführt, aus der es zusammen mit dem Laserstrahl 5 in Richtung auf das Werkstück 6 austritt. Die Laserbearbeitungsmaschine 1 umfasst ferner eine Maschinensteuerung **9**, die programmiert ist, den Bearbeitungskopf 3 samt seiner Schneidgasdüse 8 entsprechend einer Schneidkontur relativ zum Werkstück 6 zu verfahren.

Statt den Bearbeitungskopf 3 gegenüber dem ortsfesten Werkstück 6 zu bewegen, kann auch das Werkstück 6 gegenüber einem ortsfesten Bearbeitungskopf 3 bewegt werden. Auch eine Überlagerung einer Bewegung des Bearbeitungskopfes 3 und einer Bewegung des Werkstücks 6 ist möglich.

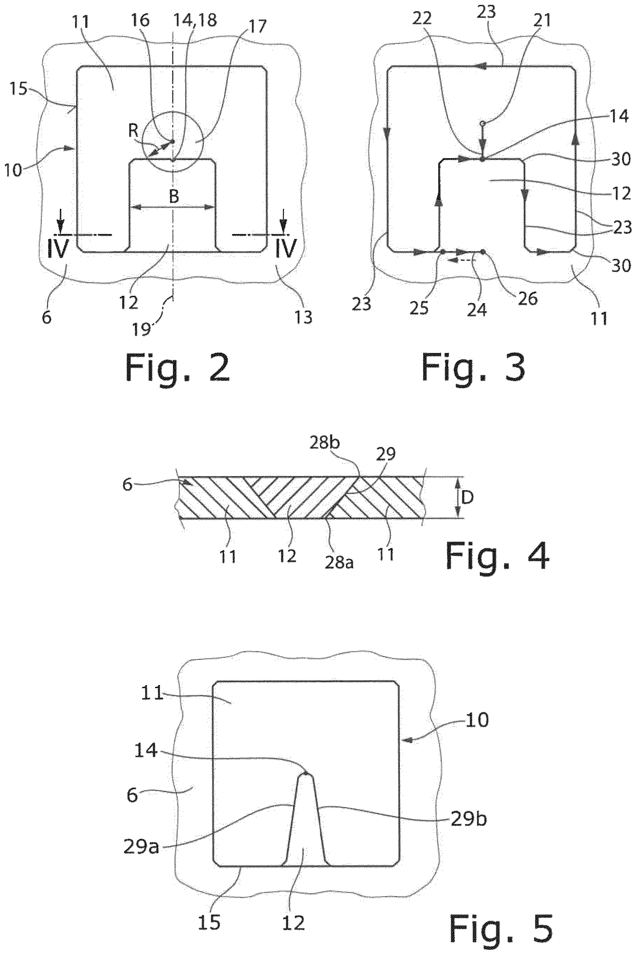

Nachfolgend wird mit Bezug auf **Fig. 2** ein Laserschneidverfahren zum Freischneiden eines Werkstückteils **10** aus dem Werkstück 6 beschrieben, wobei das freizuschneidende Werkstückteil 10 ein Abfallteil (einen Schneidbutzen) darstellt und nacheinander entlang eines Trennschnitts **23** (Fig. 3) in zwei kleinere Teilstücke **11, 12** geschnitten wird, welche nach ihrem jeweiligen Freischnitt nach unten aus dem umgebenden Restwerkstück **13** herausfallen. Der Freischnitt der Teilstücke 11, 12 erfolgt jeweils an einem Freischnittpunkt, an dem sich die Schnittkontur des Teilstücks, d.h. der jeweilige Trennschnitt 23, zu einer geschlossenen Kontur schließt. Der Freischnittpunkt des ersten Teilstücks 11 ist in Fig. 2 mit **14** bezeichnet.

Die Aufteilung in die Teilstücke 11, 12 und die Schnittführung zum Abtrennen des ersten Teilstücks 11 werden dabei derart gewählt, dass der Freischnittpunkt 14 des zuerst geschnittenen, ersten Teilstücks 11 innerhalb der Außenkontur **15** des freizuschneidenden Werkstückteils 10 liegt, also nicht auf der Außenkontur 15. Vorzugsweise ist das erste Teilstück 11 flächenmäßig größer als das zweite Teilstück 12 und umgibt das zweite Teilstück 11 dreiseitig. Wie in Fig. 2 beispielhaft gezeigt, kann das erste Teilstück 11 annähernd U-förmig und das zweite Teilstück 12 annähernd rechteckig ausgebildet sein.

Im ersten Verfahrensschnitt wird das erste Teilstück 11 freigetrennt und fällt aus dem umgebenden Restwerkstück 12, 13. Im Moment des Freischnitts, also im Freischnittpunkt 14, ist das aufgrund des Drucks des Schneidgases 7 auf das erste Teilstück 11 wirkende Kippmoment im Vergleich zu einem Freischnittpunkt, der auf der Außenkontur 15 liegt, reduziert. Dies führt zu einer verringerten oder bestenfalls zu gar keiner Kippbewegung des ersten Teilstücks 11, das somit deutlich prozesssicherer bzw. verkantungsfrei aus dem umgebenden Restwerkstück 12, 13 herausfallen kann. Das zweite Teilstück ("MacroJoint") 12 bleibt zunächst noch mit dem umgebenden Restwerkstück 13 verbunden. In einem zweiten Verfahrensschnitt wird dann auch das zweite Teilstück 12 vom Restwerkstück 13 freigetrennt und fällt, da es weitgehend nicht mehr von Material umgeben ist, sondern frei innerhalb der im ersten Verfahrensschnitt gebildeten Öffnung im Restwerkstück 13 liegt, prozesssicher bzw. verkantungsfrei aus dem Restwerkstück 13 nach unten.

Damit zum Zeitpunkt des Freischnitts möglichst kein bzw. nur ein vernachlässigbares Kippmoment aufgrund des einwirkenden Schneidgasdrucks auf das erste Teilstück 11 wirkt, liegt der Freischnittpunkt 14 des ersten Teilstücks 11 erfindungsgemäß in einem Radius **R** um den Schwerpunkt **16** des ersten Teilstücks 11, wobei die vom Radius R begrenzte Kreisfläche **17** weniger als 1/3, bevorzugt weniger als 1/5 der Gesamtfläche des ersten Teilstücks 11 einnehmen sollte. Alternativ oder zusätzlich liegt der Freischnittpunkt 14 des ersten Teilstücks 11 erfindungsgemäß im Schwerpunkt **18** des freizuschneidenden Werkstückteils 10, im Schwerpunkt 16 des ersten Teilstücks 11 oder im Bereich zwischen diesen beiden Schwerpunkten 16, 18.

Wie in Fig. 2 weiter gezeigt, ist das zweite Teilstück 11 bevorzugt spiegelsymmetrisch zu einer durch die Schwerpunkt 16, 18 des freizuschneidenden Werkstückteils 10 und des ersten Teilstücks 11 verlaufenden Linie **19**.

Das zweite Teilstück 12 muss ausreichend groß gewählt werden, damit die beim Schneiden des ersten Teilstücks 11 in das zweite Teilstück 12 eingebrachte Wärme zum Restwerkstück 13 abfließen kann. Außerdem muss das zweite Teilstück 12 so breit gewählt werden, dass es bis zum vollständigen Freischnitt des ersten Teilstücks 11 die Gewichtskraft des Werkstückteils 10 und den Schneidgasdruck aufnehmen kann, ohne dass es zu einer deutlichen Verbiegung des zweiten Teilstücks 12 kommt. Daher sollte die Breite **B** des zweiten Teilstücks 12 mindestens so groß wie die Dicke **D** (Fig. 4) des Werkstücks 6 sein.

In Fig. 2 wird eine Schneidgasdüse 8 verwendet, aus der das Schneidgas 7 koaxial zum Laserstrahl 5 in Richtung auf das Werkstück 6 austreten, d.h., zum Zeitpunkt des Freischnitts des ersten Teilstücks 4 befindet sich der Auftreffpunkt **20** des Schneidgases 7 auf das erste Teilstück 11 im Freischnittpunkt 14.

Trifft das Schneidgas 7 hingegen exzentrisch zum Laserstrahl 5 auf das Werkstück 6 auf, so sollte zum Zeitpunkt des Freischnitts des ersten Teilstücks 11 entweder das Schneidgas 7 außerhalb des ersten Teilstücks 11 auf das Werkstück 6 auftreffen oder, falls dies nicht möglich ist, der Freischnittpunkt 14 des ersten Teilstücks 11 möglichst im Bereich zwischen dem Schwerpunkt 16 des ersten Teilstücks 11 und dem Auftreffpunkt 20 liegen.

**Fig.** 3 zeigt eine vorteilhafte Schnittführung zum Freischneiden des ersten Teilstücks 11 vom zweiten Teilstück 12 und vom Restwerkstück 13. Der Einstich erfolgt bei **21** nahe dem Freischnittpunkt 14 für das erste Teilstück 11, und die Schnittlinie (Anschnitt) **22** verläuft anschließend zum Freischnittpunkt 14 an der Spitze des zweiten Teilstücks 12, bevor dann der in sich geschlossene Trennschnitt **23** des ersten Teilstücks 11 ausgeführt wird, welcher wieder am Freischnittpunkt 14 endet. Wird ein Teil ohne Anschnitt gefertigt, so liegt der Einstich auf dem geschlossenen Trennschnitt 23 des ersten Teilstücks 11. Zur Verbesserung der Kantenqualität beim Freitrennen des zweiten Teilstücks 12 kann beim Schneiden des ersten Teilstücks 11 bereits ein Teiltrennschnitt **24** zwischen dem zweiten Teilstück 12 und dem Restwerkstück 13 ausgeführt werden. Der Laserstrahl 5 wird, beginnend bei **25**, ein Stück entlang der Verbindungskontur zwischen dem zweiten Teilstück 12 und dem Restwerkstück 13 bewegt und am Umkehrpunkt **26** ausgeschaltet und an der Stelle 25 wieder eingeschaltet, um die Kontur des ersten Teilstücks 11 zu Ende zu schneiden. Das spätere Abtrennen des zweiten Teilstücks 12 kann dann mit einer besseren Qualität an der Schnittkante erfolgen.

Die Geometrie des zweiten Teilstücks 12 wird so festgelegt, dass diese ein möglichst geringes Risiko für das Verkanten des freigeschnittenen ersten Teilstücks 11 darstellt. Wie in **Fig. 4** gezeigt, wird der Trennschnitt **27** zwischen dem ersten und dem zweiten Teilstück 11, 12 idealerweise derart schräg ausgeführt, dass die Unterkante **28a** des ersten Teilstücks 11 weiter in das zweite Teilstück 12 hinein als die Oberkante **28b** vorsteht. Dadurch weist das erste Teilstück 11 schräge Kanten **29** zum zweiten Teilstück 12 hin auf, die das Fallen des ersten Teilstücks 11 nicht beeinträchtigen.

Wie in den Fign. 2 und 3 weiter gezeigt, kann der Trennschnitt 23 zwischen dem ersten und dem zweiten Teilstück 11, 12 nicht mit winkligen Ecken, sondern mit gefasten oder abgerundeten Ecken **30** ausgeführt werden, um so ein Verkanten des ersten am zweiten Teilstück wirkungsvoll zu verhindern.

Wie in **Fig.** 5 gezeigt, kann alternativ oder ergänzend zu den schrägen Kanten 29 die Aufteilung in die Teilstücke 11, 12 derart erfolgen, dass das zweite Teilstück 12 zwei von der Außenkontur 15 des Werkstückteils 10 zum Freischnittpunkt 14 des ersten Teilstücks 11 aufeinander zulaufende Seitenkanten **29a, 29b** aufweist. Diese nicht parallel zueinander verlaufenden Seitenkanten 29a, 29b wirken einem Verkanten des ersten am zweiten Teilstück ebenfalls entgegen.

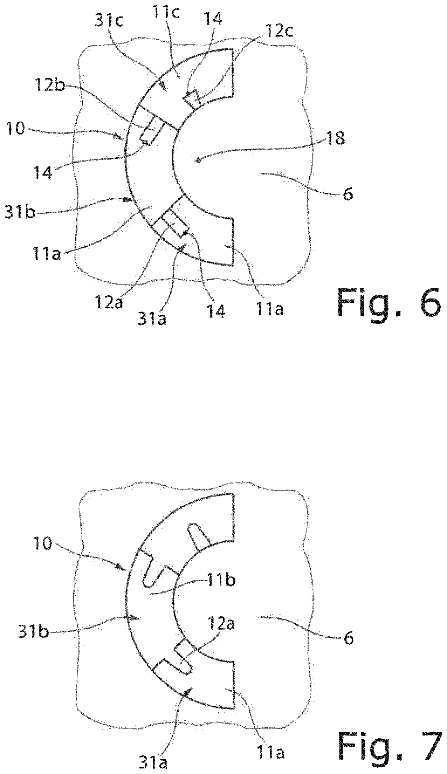

Insbesondere für den Fall, dass wie in **Fig.** 6 der Schwerpunkt 18 des freizuschneidenden Werkstückteils 10 außerhalb des Werkstückteils 10 liegt, wird das Werkstückteil 10 in mehrere nacheinander zu schneidende Segmente **31a-31c** unterteilt, die ihrerseits wie oben beschrieben jeweils in zwei Teilstücke 11a, 12b, 11b, 12b und 11c, 12c aufgeteilt werden können, welche dann wie oben beschrieben nacheinander geschnitten werden. Das Werkstückteil 10 muss dabei so lange in kleinere Segmente unterteilt werden, bis in jedem Segment der Freischnittpunkt 14 des ersten Teilstücks 11a, 11b, 11c innerhalb der Außenkontur des jeweiligen Segments liegt. In Fig. 5 wird zuerst das Segment 31a, dann das Segment 31b und zuletzt das Segment 31c geschnitten.

Wenn das zweite Teilstück 12a eines ersten Segments 31a, wie in Fig. 7 gezeigt, an einem benachbarten zweiten Segment 31b angebunden ist, das ebenfalls nach unten fallen soll, so kann das gesonderte Abtrennen dieses zweiten Teilstücks 12a entfallen. Das zweite Teilstück 12a des ersten Segments 31a wird somit zu einem Bestandteil des ersten Teilstücks 11b des zweiten Segments 31b. So kann die Produktivität des Schneidprozesses gesteigert werden.

## Patentansprüche

1. Verfahren zum Schneiden eines auf einer Werkstückauflage (4) aufliegenden, plattenförmigen Werkstücks (6) mittels eines Schneidstrahls (5) und eines Schneidfluids (7), wobei ein freizuschneidendes Werkstückteil (10) nacheinander in mindestens zwei kleinere Teilstücke (11, 12) geschnitten wird, welche nach ihrem jeweiligen Freischnitt nach unten aus einem umgebenden Restwerkstück (13) fallen oder abgesenkt werden,
**dadurch gekennzeichnet,**
**dass** die Aufteilung in die Teilstücke (11, 12) und die Schnittführung zum Abtrennen des ersten Teilstücks (11) derart erfolgen, dass der Freischnittpunkt (14) des zuerst geschnittenen, ersten Teilstücks (11) innerhalb der Außenkontur (15) des freizuschneidenden Werkstückteils (10) liegt, und dass der Freischnittpunkt (14) des ersten Teilstücks (11) in einem Radius (R) um den Schwerpunkt (16) des ersten Teilstücks (11) liegt, wobei die vom Radius (R) begrenzte Kreisfläche (17) weniger als 1/3 der Gesamtfläche des ersten Teilstücks (11) einnimmt, und/oder
**dass** der Freischnittpunkt (14) des ersten Teilstücks (11) im Schwerpunkt (18) des freizuschneidenden Werkstückteils (10), im Schwerpunkt (16) des ersten Teilstücks (11) oder im Bereich zwischen diesen beiden Schwerpunkten (16, 18) liegt.

2. Verfahren nach Anspruch 1, **dadurch gekennzeichnet, dass** das freizuschneidende Werkstückteil (10) flächenmäßig in ein größeres, erstes Teilstück (11) und ein kleineres, zweites Teilstück (12) aufgeteilt wird.

3. Verfahren nach Anspruch 1 oder 2, **dadurch gekennzeichnet, dass** das freizuschneidende Werkstückteil (10) in ein erstes Teilstück (11) und ein vom ersten Teilstück (11) dreiseitig umgebenes zweites Teilstück (12) aufgeteilt wird.

4. Verfahren nach einem der vorhergehenden Ansprüche, **dadurch gekennzeichnet, dass** die Aufteilung in die Teilstücke (11, 12) und die Schnittführung zum Abtrennen des ersten Teilstücks (11) derart erfolgen, dass die Breite (B) des zweiten Teilstücks (12) mindestens so groß wie die Dicke (D) des Werkstücks (6) ist.

5. Verfahren nach einem der vorhergehenden Ansprüche, **dadurch gekennzeichnet, dass** die Aufteilung in die Teilstücke (11, 12) derart erfolgt, dass das zweite Teilstück (12) zwei von der Außenkontur (15) des Werkstückteils (10) zum Freischnittpunkt (14) des ersten Teilstücks (11) aufeinander zulaufende Seitenkanten (29a, 29b) aufweist.

6. Verfahren nach einem der vorhergehenden Ansprüche, **dadurch gekennzeichnet, dass** ein Trennschnitt (23) zwischen dem ersten und dem zweiten Teilstück (11, 12) ohne winklige Ecken ausgeführt wird.

7. Verfahren nach einem der vorhergehenden Ansprüche, **dadurch gekennzeichnet, dass** ein Trennschnitt (23) zwischen dem ersten und dem zweiten Teilstück (11, 12) derart schräg ausgeführt wird, dass die Unterkante (28a) des ersten Teilstücks (11) weiter in das zweite Teilstück (12) hinein als die Oberkante (28b) vorsteht.

8. Verfahren nach einem der vorhergehenden Ansprüche, **dadurch gekennzeichnet, dass** beim Freischneiden des ersten Teilstücks (11) bereits ein Teiltrennschnitt (24) zwischen dem zweiten Teilstück (12) und dem Restwerkstück (13) ausgeführt wird.

9. Verfahren nach einem der vorhergehenden Ansprüche, **dadurch gekennzeichnet, dass** das Werkstückteil (10) in mehrere nacheinander zu schneidende Segmente (31a-31c) unterteilt wird, wobei mindestens ein Segment (31a) in mindestens zwei nacheinander zu schneidende Teilstücke (11, 12) aufgeteilt wird.

10. Bearbeitungsmaschine (1) mit einer Werkstückauflage (4), mit einem Schneidstrahl (5) und einem Schneidfluid (7) zum Trennen eines auf der Werkstückauflage (4) aufliegenden, plattenförmigen Werkstücks (6) in mindestens ein Werkstückteil (10) und ein Restwerkstück (13), mit einem relativ zu einem Werkstück (6) bewegbaren Bearbeitungskopf (3), aus dem der Schneidstrahl (5) und das Schneidfluid (7) austreten, und mit einer Maschinensteuerung (9), die programmiert ist, die Relativbewegung zwischen Bearbeitungskopf (3) und Werkstück (6) gemäß dem Verfahren nach einem der vorhergehenden Ansprüche zu steuern.

11. Computerprogrammprodukt, welches Codemittel aufweist, die zum Durchführen aller Schritte des Verfahrens nach einem der Ansprüche 1 bis 9 angepasst sind, wenn das Programm auf einer Maschinensteuerung (9) einer Bearbeitungsmaschine (1) abläuft.

## Claims

1. A method for cutting a plate-shaped workpiece (6) resting on a workpiece support (4) by means of a cutting jet (5) and a cutting fluid (7), wherein a workpiece part (10) to be cut free is successively cut into at least two smaller partial pieces (11, 12) which, after their respective free cutting point, fall downwards or are lowered out of a surrounding residual workpiece (13),
**characterized in that**,
the division into the partial pieces (11, 12) and the cutting guide for separating off the first partial piece (11) are carried out in such a way that the free-cutting point (14) of the first partial piece (11), which was cut first, lies within the outer contour (15) of the workpiece part (10) to be cut free, and **in that** the free-cutting point (14) of the first partial piece (11) lies within a radius (R) around the center of gravity (16) of the first partial piece (11), wherein the circular area (17) bounded by the radius (R) occupies less than 1/3 of the total area of the first partial piece (11), and/or
that the free-cutting point (14) of the first partial piece (11) lies in the center of gravity (18) of the workpiece part (10) to be cut free, in the center of gravity (16) of the first partial piece (11) or in the area between these two centers of gravity (16, 18).

2. The method according to claim 1, **characterized in that** the workpiece part (10) to be cut free is subdivided area-wise into a larger, first partial piece (11) and a smaller, second partial piece (12).

3. The method according to claim 1 or 2, **characterized in that** the workpiece part (10) to be cut free is divided into a first partial piece (11) and a second partial piece (12) surrounded on three sides by the first partial piece (11).

4. The method according to one of the preceding claims, **characterized in that** the division into the partial pieces (11, 12) and the cutting guide for separating off the first partial piece (11) are carried out in such a way that the width (B) of the second partial piece (12) is at least as large as the thickness (D) of the workpiece (6).

5. The method according to one of the preceding claims, **characterized in that** the division into the partial pieces (11, 12) is carried out in such a way that the second partial piece (12) has two side edges (29a, 29b) running towards each other from the outer contour (15) of the workpiece part (10) to the free-cutting point (14) of the first partial piece (11).

6. The method according to one of the preceding claims, **characterized in that** a separating cut (23) is made between the first and second partial pieces (11, 12) without angled corners.

7. The method according to one of the preceding claims, **characterized in that** a separating cut (23) between the first and second partial pieces (11, 12) is slanted such that the lower edge (28a) of the first partial piece (11) projects further into the second partial piece (12) than the upper edge (28b).

8. The method according to one of the preceding claims, **characterized in that** a partial separating cut (24) is already made between the second partial piece (12) and the residual workpiece (13) when the first partial piece (11) is cut free.

9. The method according to one of the preceding claims, **characterized in that** the workpiece part (10) is divided into a plurality of segments (31a-31c) to be cut successively, wherein at least one segment (31a) is divided into at least two partial pieces (11, 12) to be cut successively.

10. A processing machine (1) with a workpiece support (4), with a cutting jet (5) and a cutting fluid (7) for separating a plate-shaped workpiece (6) resting on the workpiece support (4) into at least one workpiece part (10) and a residual workpiece (13), having a processing head (3) that can be moved relative to a workpiece (6) and from which the cutting jet (5) and the cutting fluid (7) emerge, and with a machine controller (9) which is programmed to control the relative movement between the processing head (3) and the workpiece (6) in accordance with the method according to one of the preceding claims.

11. A computer program product comprising coding means which are adapted to perform all the steps of the method according to any one of claims 1 to 9 when the program is running on a machine controller (9) of a processing machine (1).

## Revendications

1. Procédure de découpe d'une pièce de fabrication (6) de forme plate, reposant sur un support de pièce de fabrication (4), au moyen d'un faisceau de découpe (5) et d'un fluide de découpe (7), dans laquelle une partie de la pièce de fabrication à découper par dégagement (10) est découpée successivement en au moins deux pièces partielles (11, 12) plus petites, lesquelles, après leur découpe respective par dégagement, tombent ou sont descendues hors d'une pièce de fabrication résiduelle (13) environnante,
**caractérisée en ce que**,
la répartition en pièces partielles (11, 12) et la conduite de la découpe pour séparer la première pièce partielle (11) sont accomplies de telle sorte que le point de découpe par dégagement (14) de la première pièce partielle (11) découpée en premier se situe à l'intérieur du contour extérieur (15) de la partie de la pièce de fabrication à découper par dégagement (10), et que le point de découpe par dégagement (14) de la première pièce partielle (11) se situe dans un rayon (R) autour du centre de gravité (16) de la première pièce partielle (11), la surface circulaire (17) délimitée par le rayon (R) occupant moins de 1/3 de la surface totale de la première pièce partielle (11), et/ou
le point de découpe par dégagement (14) de la première pièce partielle (11) se situe dans le centre de gravité (18) de la partie de la pièce de fabrication à découper par dégagement (10), dans le centre de gravité (16) de la première pièce partielle (11), ou dans la zone entre ces deux centres de gravité (16, 18).

2. Procédure selon la revendication 1, **caractérisée en ce que** la partie de la pièce de fabrication à découper par dégagement (10) est répartie en fonction de sa surface en une première pièce partielle (11) plus grande et une deuxième pièce partielle (12) plus petite.

3. Procédure selon la revendication 1 ou 2, **caractérisée en ce que** la partie de la pièce de fabrication à découper par dégagement (10) est répartie en une première pièce partielle (11) et une deuxième pièce partielle (12) entourée sur trois côtés par la première pièce partielle (11).

4. Procédure selon l'une des revendications précédentes, **caractérisée en ce que** la répartition en pièces partielles (11, 12) et la conduite de la découpe pour séparer la première pièce partielle (11) sont accomplies de telle sorte que la largeur (B) de la deuxième pièce partielle (12) soit au moins égale à l'épaisseur (D) de la pièce de fabrication (6).

5. Procédure selon l'une des revendications précédentes, **caractérisée en ce que** la répartition en pièces partielles (11, 12) est accomplie de telle sorte que la deuxième pièce partielle (12) comprend deux bords latéraux convergeant (29a, 29b) l'un vers l'autre, depuis le contour extérieur (15) de la partie de la pièce de fabrication (10) jusqu'au point de découpe par dégagement (14) de la première pièce partielle (11).

6. Procédure selon l'une des revendications précédentes, **caractérisée en ce qu'**une découpe de séparation (23) entre la première et la deuxième pièce partielle (11, 12) est effectuée sans angles droits.

7. Procédure selon l'une des revendications précédentes, **caractérisée en ce qu'**une découpe de séparation (23) entre la première et la deuxième pièce partielle (11, 12) est effectuée de manière inclinée, de telle sorte que le bord inférieur (28a) de la première pièce partielle (11) fait saillie dans la deuxième pièce partielle (12) au-delà du bord supérieur (28b).

8. Procédure selon l'une des revendications précédentes, **caractérisée en ce qu'**au moment de la découpe par dégagement de la première pièce partielle (11), une découpe de séparation partielle (24) entre la deuxième pièce partielle (12) et la pièce de fabrication résiduelle (13) est déjà effectuée.

9. Procédure selon l'une des revendications précédentes, **caractérisée en ce que** la partie de la pièce de fabrication (10) est subdivisée en plusieurs segments (31a-31c) à découper successivement, dans laquelle au moins un segment (31a) est réparti en au moins deux pièces partielles (11, 12) à découper successivement.

10. Machine de traitement (1) avec un support de pièce de fabrication (4), avec un faisceau de découpe (5) et un fluide de découpe (7) pour séparer une pièce de fabrication (6) de forme plate reposant sur le support de pièce de fabrication (4) en au moins une partie de la pièce de fabrication (10) et une pièce de fabrication résiduelle (13), avec une tête de traitement (3) mobile par rapport à la pièce de fabrication (6), d'où sortent le faisceau de découpe (5) et le fluide de découpe (7), et avec un système de commande de machine (9) programmé pour commander le mouvement relatif entre la tête de traitement (3) et la pièce de fabrication (6) conformément à la procédure selon l'une des revendications précédentes.

11. Produit de programme informatique comprenant des éléments de codage adaptés pour la réalisation de toutes les étapes de la procédure selon l'une des revendications 1 à 9, lorsque le programme est exécuté sur un système de commande de machine (9) d'une machine de traitement (1).
